# EUROPEAN PATENT APPLICATION

(11) **EP 2 732 963 A1**
(43) Date of publication of application: **21.05.2014**
(21) Application number: 12382451.8
(22) Date of filing: 15.11.2012
(51) Int. Cl.: B32B 5/02, B32B 27/12, B32B 27/20, B32B 27/32

(54) **Extrusion coated textile laminate with improved peel strength**

(71) Applicant: Dow Global Technologies LLC, Midland, MI 48674 (US)
(72) Inventor: Bonavoglia, Barbara, 8037 Zurich (CH); Cordublas, Elena E., 43001 Tarragona (ES); Claasen, Gert J., 8805 Richterswil (CH); Arteaga Larios, Fabricio F., 78170 San Luis de Potosí (MX); Ruiz, Carlos E., Katy, TX Texas 77494 (US); Degroot, Jacquelyn A., Sugar Land, TX Texas 77479 (US)
(74) Representative: Elzaburu Marquez, Alberto

(57) **Abstract**

The present invention relates to nonbreathable extrusion coated nonwoven structures. The structures comprise a nonwoven web comprised of monocomponent or bicomponent fibers having a coating comprising LDPE optionally blended with LLDPE and/or an elastomer. The monocomponent or bicomponent fibers comprise an ethylene based polymer, preferably at the surface of the fiber.

## Description

### Field of Invention

The present invention relates to non-breathable extrusion coated nonwoven structures comprising a nonwoven web of ethylene based fibers onto which has been extrusion coated a non-breathable ethylene-based film.

### Background and Brief Summary of the Invention

Nonwoven webs or fabrics are desirable for use in a variety of products such as bandaging materials, garments, disposable diapers, and other personal hygiene products, including pre-moistened wipes. Nonwoven webs having high levels of strength, softness, and abrasion resistance are desirable for disposable absorbent garments, such as diapers, incontinence briefs, training pants, feminine hygiene garments, and the like. For example, in a disposable diaper, it is highly desirable to have soft, strong, nonwoven components, such as top sheets or backsheets (also known as outer covers). For use in applications such as diapers it is desired that the fabric be non-breathable. Typically, this is achieved by lamination of the nonwoven to a film.

As used herein, the term "nonwoven web", refers to a web that has a structure of individual fibers or threads which are interlaid, but not in any regular, repeating manner. Nonwoven webs have been, in the past, formed by a variety of processes, such as, for example, air laying processes, meltblowing processes, spunbonding and carding processes, including bonded carded web processes. These various processes each have their own strengths and weaknesses. For example, spunbonded webs tend to have higher tensile strength than meltblown webs whereas the meltblown process tends to produce webs having increased liquid barrier properties as compared to spunbond nonwovens.

Propylene-based polymers, particularly homo-polypropylene (hPP) are well known in the art, and have long been used in the manufacture of fibers. Fabrics made from hPP, particularly nonwoven fabrics, exhibit high modulus but poor elasticity and softness. Nevertheless, these fabrics are commonly incorporated into multicomponent articles, e.g., diapers, wound dressings, feminine hygiene products and the like.

In comparison, polyethylene-based elastomers, and the fibers and fabrics made from these polymers, tend to exhibit low modulus and good elasticity, but they also tend to have low tenacity, stickiness and exhibit a hand feel which is generally considered as unacceptable for many applications.

Tensile strength of nonwovens and tenacity of fibers is important because the manufacture of multicomponent articles typically involves multiple steps (e.g., rolling/unrolling, cutting, adhesion, etc.), and webs lacking tensile strength may not survive one or more of these steps. Fibers with a high tensile strength (also known as tenacity) are also advantaged over fibers with a low tensile strength because the former will experience fewer line breaks, and thus greater productivity will be obtained from the manufacturing line. Moreover, the end-use of many products also typically requires a level of tensile strength specific to the function of the component. Tensile strength must be balanced against the cost of the process used to achieve the higher tensile strength or to achieve higher tenacity. Optimized fabrics will have the minimum material consumption (basis weight) to achieve the minimum required tensile strength for the manufacture and end-use of the fiber, component (e.g., nonwoven fabric) and article.

Hand feel is another important aspect for many nonwoven structures, particularly those structures intended for use in the hygiene and medical field. Low modulus is one aspect of hand feel. Fabrics made from fibers with a low modulus will feel "softer", all else being equal, than fabrics made from fibers with a high modulus. A fabric comprised of lower modulus fibers will also exhibit lower flexural rigidity which translates to better drapability and better fit. In contrast, a fabric made from a higher modulus fiber, e.g., hPP, will feel harsher (stiffer) and will drape less well resulting in a poorer fit. Fabrics made from polyethylene-based elastomers also tend to lack adequate hand feel as they tend to have an undesirable feel to the skin commonly characterized by descriptors such as tacky, sticky, clammy, rubbery, or wet.

Fiber extensibility/elasticity is another important criterion for nonwoven structures, particularly those used in hygiene and medical applications, because the characteristic translates to a better comfort and fit as the article made from the fiber will be able to be more body conforming in all situations. Diapers with elastic components will have less sagging in general as body size and shape and movement vary. With improved fit, the general well being of the user is improved through improved comfort, reduced leakage, and a closer resemblance of the article to cotton underwear.

Used in combination with other materials such as another nonwoven, film, apertured film, fibers, woven fabric or others, nonwoven structures with synergistic properties may be achieved. One such structure involves the combination of nonwoven webs with non-breathable polyolefin films. The lamination of these two components is currently frequently done using hot melt adhesive s (HMA). Typical speed for such lamination process is in the order of 200-300 m/min. The nonwoven currently used for such applications is typically a spunbond or spunbond-meltblown-spunbond web made with polypropylene. The typical nonwoven basis weight is 6-80 grams per square meter (GSM). The non-breathable film is typically a polyethylene rich film. The typical basis weight for the films is 10-30 GSM.

In the current HMA lamination step, the film and the nonwoven are fed separately to the lamination line. Therefore both the film and the nonwoven need to have a certain level of tensile strength in order to be able to survive the process Moreover, given the very low basis weight of the film, sometime the application of the HMA burns the film. This obviously limits further downgauging of the film.

To further downgauge a textile backsheet, the extrusion coating process can be used. Via extrusion coating, the film layer is deposited in melt form directly on top of a nonwoven layer. In this way, the basis weight of the film layer can be less than 10 GSM. Moreover, the typical production speeds of extrusion coating are above 300 m/min, further increasing th economical advantages of this process. However, when the standard polypropylene nowovens are used in this process, the extrusion coated textile backsheet is perceived as significantly less soft than the hot-melt-adhsive-laminated textile backsheet. The elongation at break of such extrusion coated backsheets was also observed to be lower than what can be achieved via HMA lamination.

Acordingly, structures having extrusion coated films onto nonwovens are desired, where the structure is perceived as soft with relatively higher elongation to break.

Some of these advantages are obtained when using the present invention which, in a first aspect, is a coating of a LDPE optionally blended with LLDPE or an elastomer onto non-wovens made from bico or mono fibers having polyethylene on the surface. It has been discovered that when such nonwovens are used, the textile backsheet obtained via extrusion coating offers significantly better softness and higher elongation at break than if a polypropylene nowoven is used. It also offers improved abrasion resistance than if polypropylene NW is used. Moreover, the extrusion coated textile backsheets with bico or mono PE nonwovens have similar softness and elongation at break than HMA laminated textile backsheet nonwoven structures.

### Brief Description of the Drawings

Figure 1 is a bargraph showing the handle-o-meter results of the indicated examples.
Figures 2-4 show the stress strain curves in the cross direction for the various coating formulations on each of the nonwoven substrates.
Figures 5-7 show the stress strain curves in the machine direction for the various coating formulations on each of the nonwoven substrates.
Figures 8-13 show the stress strain curves in the cross direction (Figures 8-10), and machine direction (Figures 11-13) for the various coating on the various nonwoven substrates.
Figure 14 shows the abrasion resistance of the various coatings on the various nonwoven substrates.

### Detailed Description of the Invention

As used herein, the term "nonwoven web" or "nonwoven fabric" or "nonwoven", refers to a web that has a structure of individual fibers or threads which are interlaid, but not in any regular, repeating manner. Nonwoven webs have been formed by a variety of processes, such as, for example, air laying processes, meltblowing processes, spunbonding processes and carding processes, including bonded carded web processes.

As used herein, the term "meltblown" , refers to the process of extruding a molten thermoplastic material through a plurality of fine, usually circular, die capillaries as molten threads or filaments into a high velocity gas (e.g., air) stream which attenuates the filaments of molten thermoplastic material to reduce their diameter, which may be to a microfiber diameter. Thereafter, the meltblown fibers are carried by the high velocity gas stream and are deposited on a collecting surface to form a web of randomly dispersed meltblown fibers.

As used herein, the term "spunbonded", refers to the process of extruding a molten thermoplastic material as filaments from a plurality of fine, usually circular, capillaries of a spinneret with the diameter of the extruded filaments then being rapidly reduced by drawing the fibers and collecting the fibers on a substrate.

As used herein, the term "microfibers", refers to small diameter fibers having an average diameter not greater than about 100 microns. Fibers, and in particular, spunbond and meltblown fibers used in the present invention can be microfibers. More specifically, the spunbond fibers can advantageously be fibers having an average diameter of about 14-28 microns, and having a denier from about 1.2-5.0, whereas the meltblown fibers can advantageously be fibers having an average diameter of less than about 15microns, or more advantageously be fibers having an average diameter of less than about 12 microns, or even more advantageously be fibers having an average diameter of less than about 10 microns. It also contemplated that the meltblown fibers may have even smaller average diameters, such as less than 5 microns.

As used herein, the term "polymer" generally includes, but is not limited to, homopolymers, copolymers, such as, for example, block, graft, random and alternating copolymers, terpolymers, etc., and blends and modifications thereof. Furthermore, unless otherwise specifically limited, the term "polymer" shall include all possible geometrical configurations of the material. These configurations include, but are not limited to, isotactic, syndiotactic and random symmetries.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Medium Density Polyethylene (MDPE); and High Density Polyethylene (HDPE). These polyethylene materials are generally known in the art; however the following descriptions may be helpful in understanding the differences between some of these different polyethylene resins

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, herein incorporated by reference). LDPE resins typically have a density in the range of 0.916 to 0.940 g/cm³.

"LLDPE" refers to linear ethylene alpha olefin copolymers having a density in the range of from about 0.855 about 0.912 g/cm³ to about 0.925 g/cm³). "LLDPE" may be made using chromium, Ziegler-Natta, metallocene, constrained geometry, or single site catalysts. The term "LLDPE" includes znLLDPE, uLLDPE, and mLLDPE. "znLLDPE" refers to linear polyethylene made using Ziegler-Natta or chromium catalysts and typically has a density of from about 0.912 to about 0.925 and a molecular weight distribution greater than about 2.5, "uLLDPE" or "ultra linear low density polyethylene" refers to linear polyethylene having a density of less than 0.912 g/cm³), but which is made using chromium or Ziegler-Natta catalysts and thus typically have a molecular weight distribution ("MWD") greater than 2.5. "mLLDPE" refers to LLDPE made using metallocene, constrained geometry, or single site catalysts. These polymers typically have a molecular weight distribution ("MWD") in the range of from 1.5 to 8.0. These resins will typically have a density in the range of from about 0.855 to 0.925 g/cm³. Preferred copolymers include 1-hexene and 1-octene.

"MDPE" refers to linear polyethylene having a density in the range of from greater than 0.925 g/cm³ to about 0.940 g/cm³). "MDPE" is typically made using chromium or Ziegler-Natta catalysts or using metallocene, constrained geometry, or single cite catalysts. and typically have a molecular weight distribution ("MWD") greater than 2.5.

"HDPE" refers to linear polyethylene having a density in the range greater than or equal to 0.940 g/cm³). "HDPE" is typically made using chromium or Ziegler-Natta catalysts or using metallocene, constrained geometry, or single cite catalysts and typically have a molecular weight distribution ("MWD") greater than 2.5.

"Polypropylene" shall mean polymers comprising greater than 50% by weight of units which have been derived from propylene monomer. This includes homopolymer polypropylene, random copolymer polypropylene, impact copolymer polypropylene, and propylene based plastomers and elastomers. These polypropylene materials are generally known in the art.

As used herein, the term "polypropylene based plastomers (PBP) or elastomers (PBE)" (collectively, these may be referred to as "PBPE") includes reactor grade copolymers of propylene having heat of fusion less than about 100 Joules/gm and MWD < 3.5. The PBPs generally have a heat of fusion less than about 100 Joules/gram while the PBEs generally have a heat of fusion less than about 40 Joules/gram. The PBPs typically have a weight percent ethylene in the range of about 3 to about 10 wt% ethylene, with the elastomeric PBEs having an ethylene content of from about 10 to 15 wt% ethylene.

As used herein, the term "extensible" refers to any nonwoven material which, upon application of a biasing force, is able to undergo elongation to at least about 50 percent strain and more preferably at least about 70 percent strain without experiencing catastrophic failure.

As used herein, the term "tensile strength" describes the peak force for a given basis weight when pulled in either the machine direction (MD) or cross direction (CD) of a nonwoven when pulled to break. The peak force may or may not correspond to the force at break or strain at break. "Elongation" unless otherwise specified, refers to the strain corresponding to the tensile strength.

The following analytical methods are used in the present invention:
Density is determined in accordance with ASTM D792.
"Melt index" also referred to as "MI" or "I₂" is determined according to ASTM D1238 (190 °C, 2.16 kg). "Melt flow rate" or "MFR" is determined according to ASTM D1238 (230 °C, 2.16 kg). Melt index is generally associated with polyethylene polymers, while melt flow rate is associated with propylene based polymers
"Abrasion Resistance" was measured according to the method described below:
   A nonwoven fabric or laminate is abraded using a Sutherland 2000 Rub Tester to determine the fuzz level. A lower fuzz level is desired which means the fabric has a higher abrasion resistance. An 11.0 cm x 4.0cm piece of nonwoven fabric is abraded with sandpaper according to ISO POR 01 106 (a cloth sandpaper aluminum oxide 320-grit is affixed to a 2 lb. weight, and rubbed for 20 cycles at a rate of 42 cycles per minute) so that loose fibers are accumulated on the top of the fabric. The loose fibers were collected using tape and measured gravimetrically. The fuzz level is then determined as the total weight of loose fiber in grams divided by the fabric specimen surface area (44.0 cm²).
"Elongation at Break" is determined according to ISO method 527-3 Ed. 1995, for both the cross direction and the machine direction.
"Softness" is determined using the Handle-o-meter (manufactured by Edana, part number WSP 90.3 (05)). The method uses 10x10 cm, min 3 samples, a slit width of 5 mm, and an arm weight of 100 grams. Measurements are done in machine direction (MD) and cross-direction stiffness (CD), and reported as combination or for specific direction.
"Peel strength is measured according to this method:
   The delamination is initiated manually and then the laminate sample is cut into specimens of 35 mm length and 15 mm width. The two delaminated layers of the specimen are then clamped in an Instron instrument with load cell of 50 N. The test speed used is 125 mm/min and the average force to peel is detected. If the delamination was unable to be started manually, or if the sample did not delaminate at the maximum force of the instrument, or if the delamination force exceeds that of the film or nowoven's maximum tensile strength, the results were reported in the Examples as "no delamination possible",

Water Vapor Transmission Rate (or WVTR) is the absolute transmission rate, which can be reported, for example, in units of g/m²day. The ranges of WVTR covered in claims are determined according to ASTM E 398 using a Lissy L80-5000 measurement device, at 38 °C, with relative humidity of 90% on side and 0% on the other. The sample size used for measurements was 5cm². WVTR data may be normalized with respect to sample thickness to a permeability coefficient, for example, in units of (g mm)/(m²day) as used herein.

### Nonwoven Structure

The non-breathable extrusion coated nonwoven structures of the present invention comprise a nonwoven web onto which a non-breathable film layer has been extrusion coated, wherein the film layer is comprised of an ethylene based polymer.

### Nonwoven

The nonwoven web is comprised of monocomponent or bicomponent fibers wherein the monocomponent or bicomponent fibers comprise an ethylene based polymer. The non-breathable film is comprised of an ethylene based polymer.

The nonwoven web may comprise a single web, such as a spunbond web, a carded web, an airlaid web, a spunlaced web, or a meltblown web. However, because of the relative strengths and weaknesses associated with the different processes and materials used to make nonwoven fabrics, composite structures of more than one layer are often used in order to achieve a better balance of properties. Such structures are often identified by letters designating the various lays such as SM for a two layer structure consisting of a spunbond layer and a meltblown layer, SMS for a three layer structure, or more generically SXₙS structures, where X can be independently a spunbond layer, a carded layer, an airlaid layer, a spunlaced layer, or a meltblown layer and n can be any number, although for practical purposes is generally less than 5. In order to maintain structural integrity of such composite structures, the layers must be bonded together. Common methods of bonding include point bonding, adhesive lamination, and other methods known to those skilled in the art. All of these structures may be used in the present invention.

The fibers which make up the nonwoven web may be monocomponent or bicomponent fibers. In either case, it is preferred that the surface of the fiber comprise a polyethylene resin other than LDPE. The polyethylene resin can advantageously be a single site catalyzed resin (mLLDPE), or a post metallocene catalyzed LLDPE, or a Ziegler-Natta catalyzed LLDPE, or HDPE, or MDPE. If monocomponent fibers are used it is preferred that the resin used in the fiber comprise 100% linear (including "substantially linear") polyethylene.

If bicomponent fibers are used, it is preferred that the fibers be in a sheath-core form, with the sheath comprising a polyethylene other than LDPE as described for the monocomponent fiber. The core of such fibers may comprise homopolymer polypropylene (hPP), polyester or an elastomeric polymer. It is preferred that the sheath comprise from 10 to 50 percent by weight of the fiber.

It is also contemplated that the nonwoven web for uses in the structure of the present invention may comprise bicomponent staple fibers thermally bonded to a nonwoven web. The bicomponent staple fibers can be in a sheath-core form, with the sheath comprising an LLDPE as described for the monocomponent fiber. The core of such fibers may comprise homopolymer polypropylene (hPP), polyester or an elastomeric polymer. It is preferred that the sheath comprise from 20 to 50 percent by weight of the fiber.

### Coating Layer

The coating layer for the structures of the present invention comprises from 20 to 80% by weight LDPE, from 0 to 80% linear polyethylene, and from 0 to 15% of an elastomer. It should be understood that the percentages referred to in the previous sentence refer only to the resin used in the coating layer and that there may also be fillers or other additives in the coating layer. The preferred LDPE for use in the coating layer will have a density between 0.915 and 0.925 g/cm3, preferably in the range of from 0.915 and 0.920 g/cm3. The preferred LDPE will also have a melt index between 0.5 and 10 g/10 min, preferably between 1 and 8 g/10min.

The linear polyethylene, if present in the coating layer, will preferably have a melt index between 5 and 35 g/10 min, more preferably from 15 to 25 g/10 min. The preferred linear polyethylene for the coating layer will also have a density of from 0.902 to 0.955 g/cm³. Multimodal polyethylene is also contemplated for use in the linear polyethylene component.

One type of linear polyethylene which may be preferred for some embodiments of the present invention are those described in WO/2011/002868 or US provisional application 61/543425 (filed on October 5, 2011), hereby incorporated by reference in their entirety. Such ethylene/α-olefin interpolymer compositions (linear low density polyethylene (LLDPE)) comprise (a) less than or equal to 100 percent, for example, at least 70 percent, or at least 80 percent, or at least 90 percent, by weight of the units derived from ethylene; and (b) less than 30 percent, for example, less than 25 percent, or less than 20 percent, or less than 10 percent, by weight of units derived from one or more α-olefin comonomers. The term "ethylene/α-olefin interpolymer composition" refers to a polymer that contains more than 50 mole percent polymerized ethylene monomer (based on the total amount of polymerizable monomers) and, optionally, may contain at least one comonomer.

The α-olefin comonomers of this preferred embodiment typically have no more than 20 carbon atoms. For example, the α-olefin comonomers may preferably have 3 to 10 carbon atoms, and more preferably 3 to 8 carbon atoms. Exemplary α-olefin comonomers include, but are not limited to, propylene, 1-butene, 1-pentene, 1-hexene, 1-heptene, 1-octene, 1-nonene, 1-decene, and 4-methyl-1-pentene. The one or more α-olefin comonomers may, for example, be selected from the group consisting of propylene, 1-butene, 1-hexene, and 1-octene; or in the alternative, from the group consisting of 1-hexene and 1-octene.

The ethylene/α-olefin interpolymer composition of this preferred embodiment is characterized by having a Comonomer Distribution Constant in the range of from greater than from 45 to 400, for example from 100 to 400, or from 75 to 300, or from 75 to 200, or from 85 to 150, or from 85 to 125.

The ethylene-based polymer composition of this preferred embodiment is characterized by having a zero shear viscosity ratio (ZSVR) in the range of from 1 to 20, for example, from 2 to 10, or from 2 to 6, or from 2.5 to 4. In some embodiments it is preferred that the ZSVR is in the range of from 1 to less than 2.

The ethylene/α-olefin interpolymer composition of this preferred embodiment has a density in the range of 0.903 to 0.965 g/cm³. For example, the density can be from a lower limit of 0.903, 0.910, 0.915 0.920, 0.925 or 0.930 g/cm³ to an upper limit of 0.945, 0.950, 0.955, 0.960, 0.965 g/cm³.

The ethylene/α-olefin interpolymer composition of this preferred embodiment has a molecular weight distribution (M_{w}/Mₙ) in the range of from 1.8 to 3.5. For example, the molecular weight distribution (M_{w}/Mₙ) can be from a lower limit of 1.8, 2, 2.1, or 2.2 to an upper limit of 2.5, 2.7, 2.9, 3.2, or 3.5.

The ethylene/α-olefin interpolymer composition of this preferred embodiment has a molecular weight (M_{w}) in the range of 50,000 to 250,000 Daltons. For example, the molecular weight (M_{w}) can be from a lower limit of 50,000, 60,000, or 70,000 Daltons to an upper limit of 150,000, 180,000, 200,000 or 250,000 Daltons.

The ethylene/α-olefin interpolymer composition of this preferred embodiment has a molecular weight distribution (M_{z}/M_{w}) in the range of less than 4, for example, less than 3, less than 2.

The ethylene/α-olefin interpolymer composition of this preferred embodiment has a vinyl unsaturation of less than 0.15 vinyls, preferably less than 0.1vinyls per one thousand carbon atoms present in the backbone of the ethylene-based polymer composition.

The ethylene/α-olefin interpolymer composition of this preferred embodiment has a long chain branching frequency in the range of from 0.02 to 3 long chain branches (LCB) per 1000C

In one embodiment, the ethylene/α-olefin interpolymer composition of this preferred embodiment comprises less than or equal to 100 parts, for example, less than 10 parts, less than 8 parts, less than 5 parts, less than 4 parts, less than 1 parts, less than 0.5 parts, or less than 0.1 parts, by weight of metal complex residues remaining from a catalyst system comprising a metal complex of a polyvalent aryloxyether per one million parts of the ethylene-based polymer composition. The metal complex residues remaining from the catalyst system comprising a metal complex of a polyvalent aryloxyether in the ethylene-based polymer composition may be measured by x-ray fluorescence (XRF), which is calibrated to reference standards. The polymer resin granules can be compression molded at elevated temperature into plaques having a thickness of about 3/8 of an inch for the x-ray measurement in a preferred method. At very low concentrations of metal complex, such as below 0.1 ppm, ICP-AES would be a suitable method to determine metal complex residues present in the ethylene-based polymer composition.

In one embodiment, ethylene/α-olefin interpolymer composition has a comonomer distribution profile comprising a monomodal distribution or a bimodal distribution in the temperature range of from 35 °C to 120 °C, excluding purge.

Any conventional ethylene (co)polymerization reaction processes may be employed to produce the ethylene-based polymer composition. Such conventional ethylene (co)polymerization reaction processes include, but are not limited to, gas phase polymerization process, slurry phase polymerization process, solution phase polymerization process, and combinations thereof using one or more conventional reactors, e.g. fluidized bed gas phase reactors, loop reactors, stirred tank reactors, batch reactors in parallel, series, and/or any combinations thereof.

Elastomers which can optionally be blended with the LDPE and/or LLDPE for use in the coating layer of the present invention include propylene based plastomers or elastomers (PBPEs), olefin block copolymers ("OBCs") and linear polyethylene having a density less than 0.905 g/cm³. Preferred PBPEs are those comprising from 5 and 18 % of units derived from ethylene, preferably from 7 to 10%, and a melt flow rate (MFR, 2.16 kg @ 230°C) of from 5 to 30 g/ 10 min, and a density in the range of from 0.86 to 0.905 g/cm³. PBPEs are a relatively new class of propylene/alpha-olefin copolymers which are further described in details in the U.S. Patent Nos. 6,960,635 and 6,525,157, incorporated herein by reference. Such propylene/alpha-olefin copolymers are commercially available from The Dow Chemical Company, under the tradename VERSIFY™, or from ExxonMobil Chemical Company, under the tradename VISTAMAXX™. Olefin block copolymers, are a relatively new class of material which are more fully described in WO 2005/090427, US2006/0199931, US2006/0199930, US2006/0199914, US2006/0199912, US2006/0199911, US2006/0199910, US2006/0199908, US2006/0199907, US2006/0199906, US2006/0199905, US2006/0199897, US2006/0199896, US2006/0199887, US2006/0199884, US2006/0199872, US2006/0199744, US2006/0199030, US2006/0199006 and US200610199983; each publication being fully incorporated herein by reference. OBCs are commercially available from The Dow Chemical Company under the INFUSE™ trademark

Preferred elastomeric LLDPEs are ethylene-octene copolymers having a density between 0.86 and 0.905 g/cm³ and a melt index (MI, 2.16 kg @ 190°C) between 2 to 25 g/10 min, preferably between 5 and 15 g/10 min.

The coating layer may optionally contain one or more additives as is generally known in the art. Such additives include, but are not limited to, antistatic agents, color enhancers, dyes, lubricants, fillers such as TiO₂ or CaCO₃, opacifiers, nucleators, processing aids, pigments, primary antioxidants, secondary antioxidants, processing aids, UV stabilizers, anti-blocks, slip agents, tackifiers, fire retardants, anti-microbial agents, odor reducer agents, anti fungal agents, and combinations thereof. In some applications it is preferred that the coating layer comprise TiO₂ and/or CaCO₃. The coating layer should be non-breathable meaning that it preferably has a WVTR less than or equal to 150 (g*mm)/(m²*day), preferably less than or equal to 130 (g*mm)/(m²*day) Considering the goal of providing a non-breathable layer, it is generally preferred that the coating layer comprise less than 25% by weight filler, more preferably less than 20% by weight, or even less than 10% by weight.

In one embodiment, a tie layer may be located between the nonwoven web and the coating layer

The nonwoven material of the present invention will preferably have a basis weight (weight per unit area) from about 5 grams per square meter (GSM) to about to about 20 gsm. The basis weight for the coating layer can advantageously be from 4 to 20 GSM, more preferably from about 8 to 12 GSM.

The coating layer is applied to the nonwoven wed using an extrusion coating process. Preferably the coating process is run at a line speed of from 200 to 700 m/min, preferably from 300 to 500 m/min.

The coated nonwoven structures of the present invention can be characterized by their unique combination of properties. Preferably the coated nonwoven structure has an abrasion resistance as determined by the method described above of maximum 0.5 mg/cm³, more preferably maximum 0.3 mg/cm³. Abrasion resistance can be optimized for some compositions by going beyond the peak bonding temperature to slightly over-bond the material.

Preferably the coated nonwoven structure has an elongation at break in CD as determined by ISO method 527-3 Ed. 1995 of at least 50%, more preferably at least 60%, and an elongation at break in MD as determined by ISO method 527-3 Ed. 1995 of at least 40%, more preferably at least 50%. Preferably the coated nonwoven structure when normalized to a basis weight of 28 gsm, has a softness as determined by handle-o-meter of maximum 45, more preferably maximum 35. Preferably the coated nonwoven structure has a peel strength which exceeds the testing limits of the described method due to the inability to start the delamination or that the delamination force exceeds that of the film or nowoven's maximum tensile strength.

The coated nonwoven structures of the present invention may be used in a wide variety of applications. For example, they may be well suited for use in medical applications, particularly when the structure has a basis weight of in the range of 10-50 gsm. They may also be used in hygiene applications, particularly with a basis weight in the range of 6-30 gsm. It is also envisaged that they may be used in industrial applications, particularly with a basis weight in the range of 10 - 50 gsm.

### EXAMPLES

The following resins are used in the following Examples:
Resin A is an LDPE prepared in an autoclave reactor having a density of 0.918 g/cc and a melt index (190°C / 2.16 kg) of 7.5 g/10 min;
Resin B is a PBPE produced in solution process via metallocene catalysis having an ethylene content of 9% and an MFR (230°C / 2.16 kg) of 25 g/10 min and a density of 0.876 g/cc
Resin C is a linear polyethylene resin having a melt index (190°C / 2.16 kg) of 21.5 g/10 min and a density of 0.907 g/cc.
Resin D is an LDPE prepared in an autoclave reactor having a density of 0.918 g/cc and a melt index (190°C / 2.16 kg) of 2.3 g/10 min
Resin E is a blend of 70% Resin C and 30% Resin D. The blend has a density of 0.911 g/cc and a MI (190°C / 2.16 kg) of 12 g/10 min.

The nonwovens used for the examples are all spunbond nonwovens having a basis weight of 20 g/m². The fibers used to make the nonwoven are 1.8 denier fibers which were either polypropylene, polyethylene or a bico fiber having a polypropylene core and a polyethylene sheath (50-50), as indicated in the tables.

### Extrusion coating process data

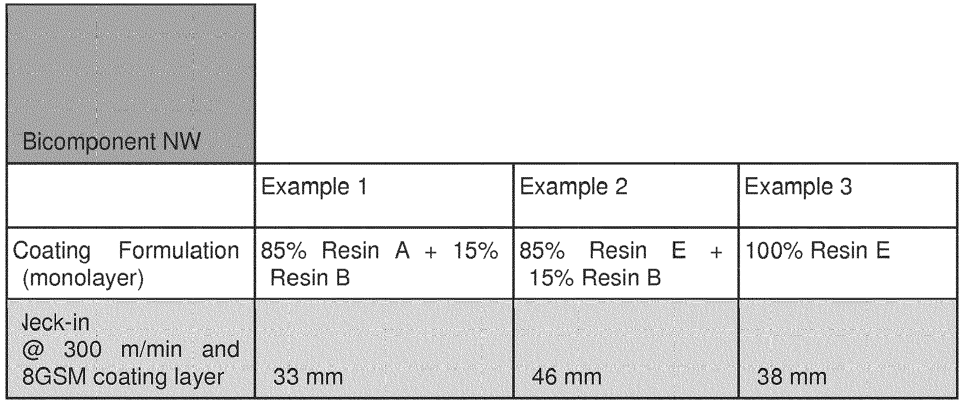

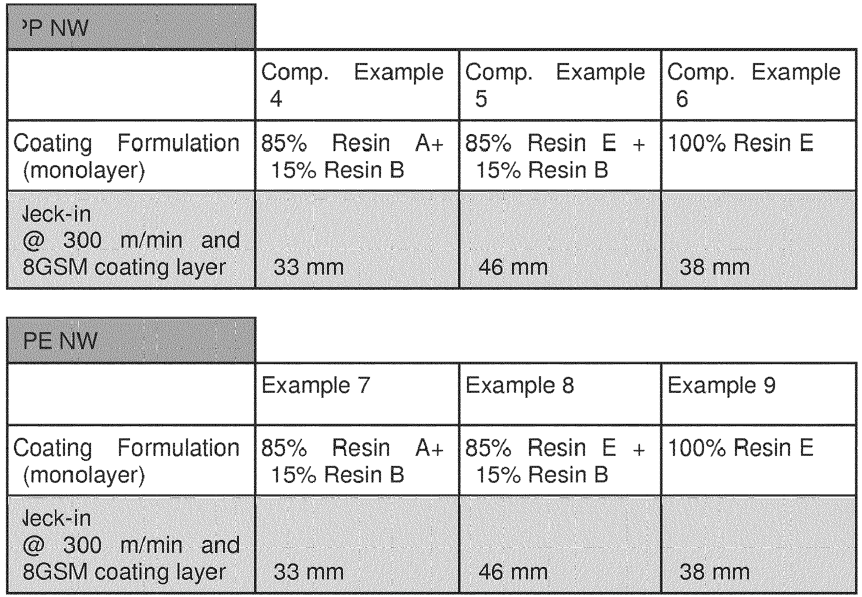

Reference Sample: A commercial HMA laminated textile backsheet containing hPP homopolymer nonwoven and polyethylene film laminated thereto via Hot Melt Adhesive was use as a comparative Example, as this type of structure is currently considered to be the industry standard for softness. Total GSM is reported in the charts.

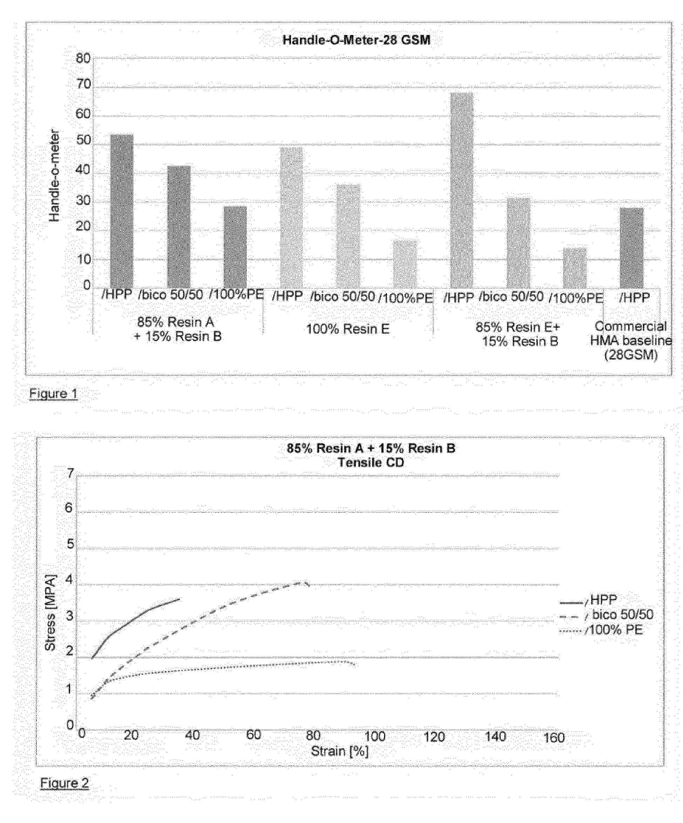

As can be seen in Figure 1 below, with same coating formulation, mono PE and bico NW give softer textile backsheets than hPP NW on the handle-o-meter testing apparatus.

With the formulation based on blends of Resins B and Resin E and bico NW, the softness is similar to the one of the commercial baseline (which is HMA laminated).

With the formulations based on only polyethylene NW, each of the coating formulations give softer samples than the commercial baseline.

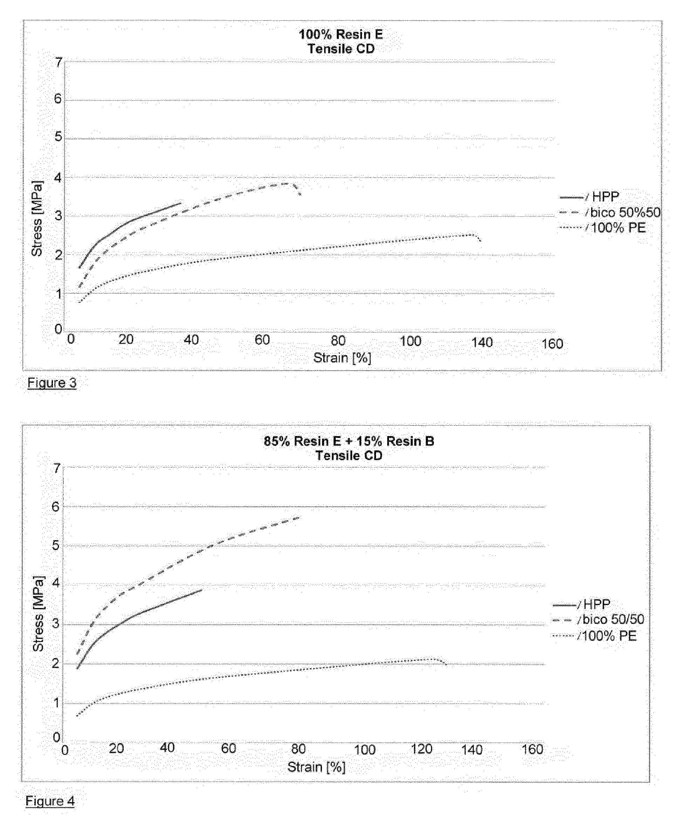

Figures 2-4 show the stress strain curves in the cross direction for the various coating formulations on each of the nonwoven substrates. As can be seen, for each coating formulation, a bico NW and a mono PE NW give much higher elongation at break in cross-direction than the PP NW.

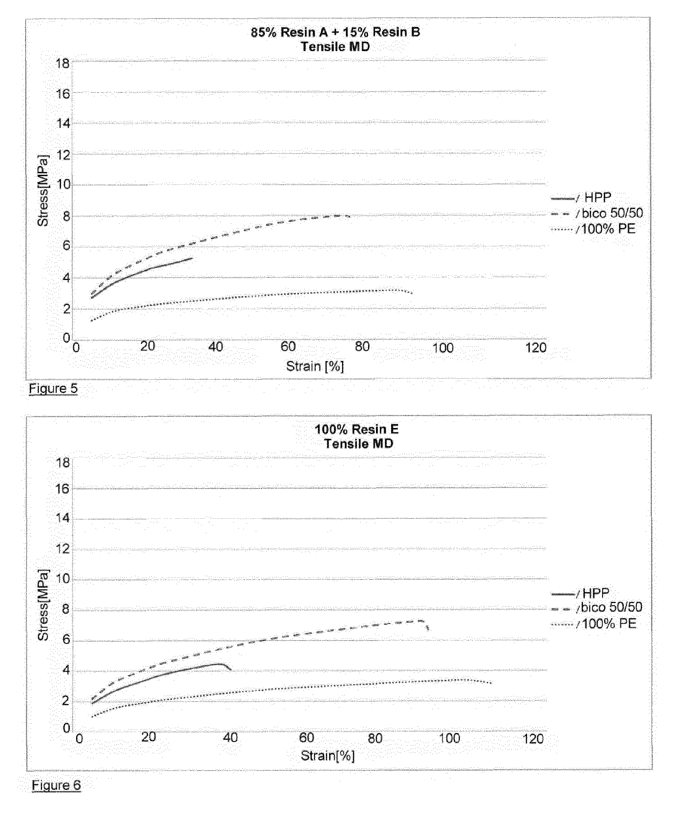

Figures 5-7 show the stress strain curves in the machine direction for the various coating formulations on each of the nonwoven substrates. As can be seen, for each coating formulation, a bico NW and a mono PE NW give much higher elongation at break in machine-direction than the PP NW.

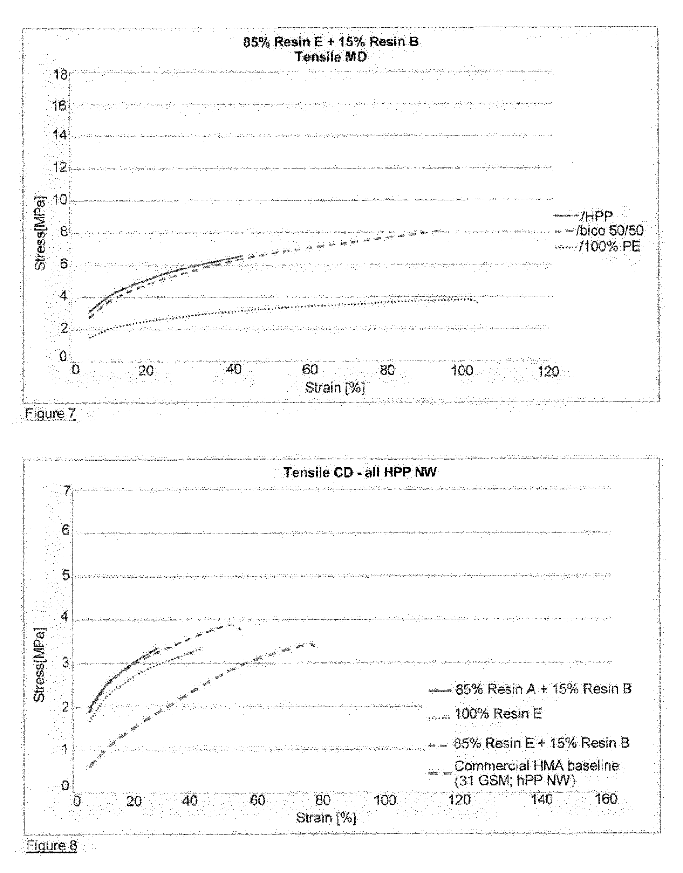

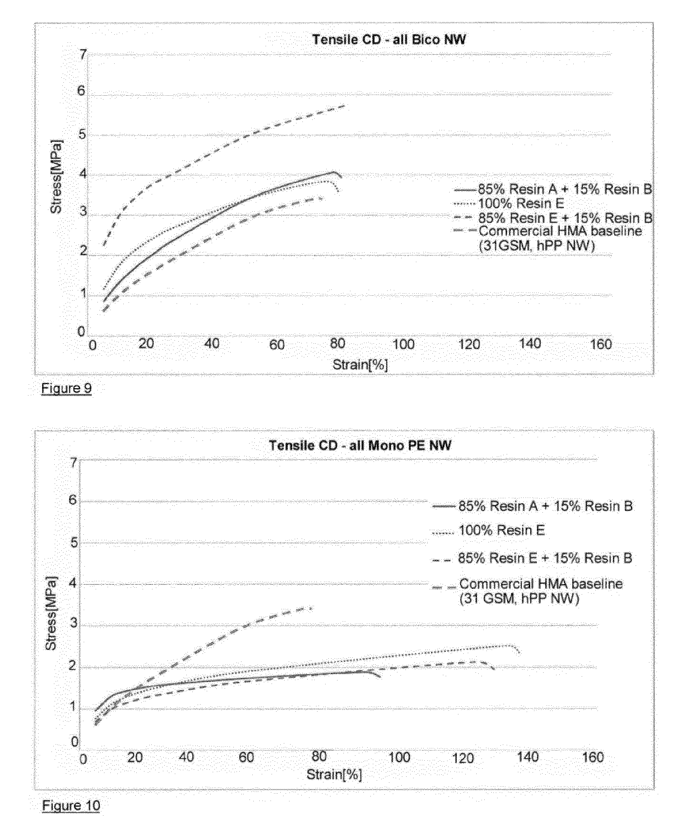

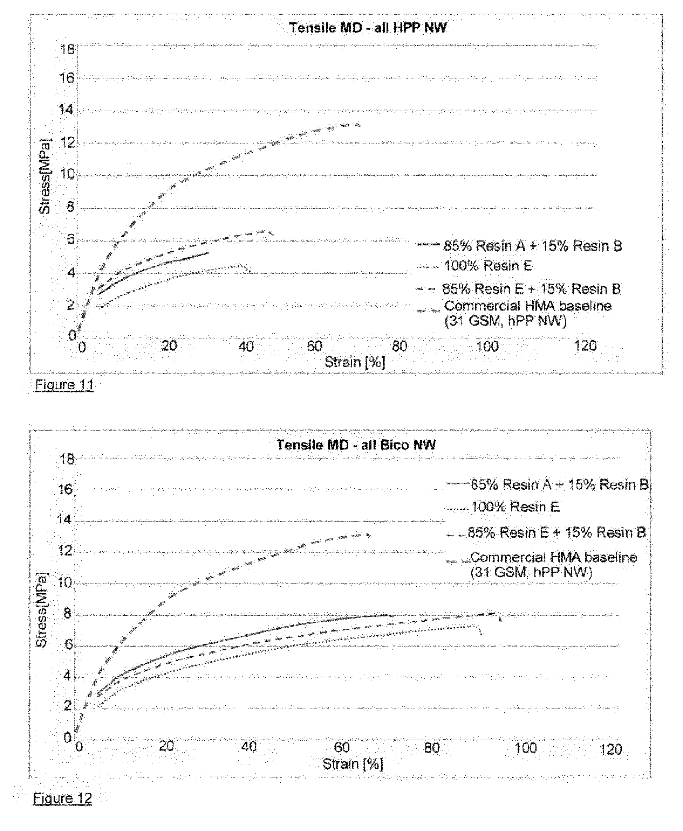

Figures 8-13 show the stress strain curves in the cross direction (Figures 8-10), and machine direction (Figures 11-13) for the various coating on the various nonwoven substrates. As seen in these figures, in both the Cross-direction and Machine Direction, only using a bico NW or a mono PE NW allows one to use extrusion coating and still reach the same level of elongation at break as with HMA lamination.

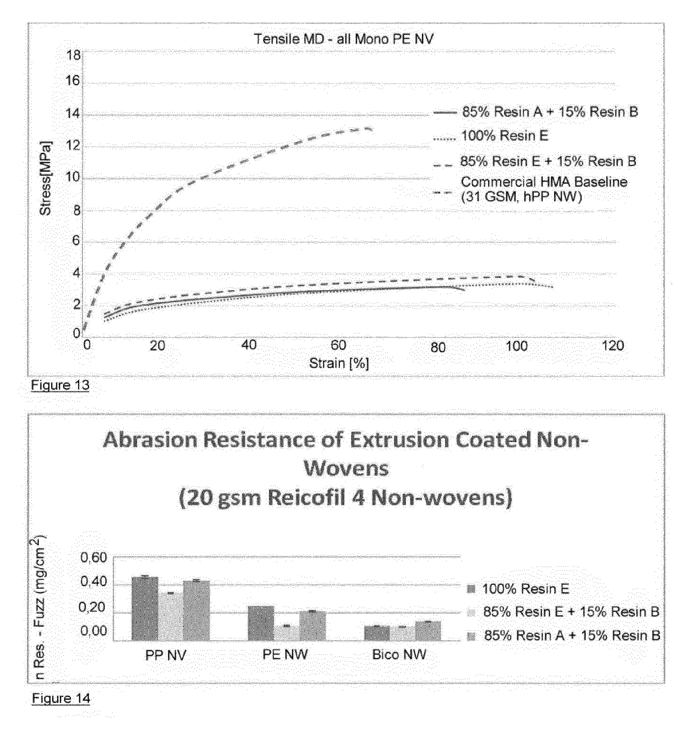

Figure 14 shows the abrasion resistance of the various coatings on the various nonwoven substrates. As can be seen, using the same coating formulation, the samples with the current hPP NW give worse results than the samples with bico PP:PE and mono PE NW, which is not the case with uncoated samples. For the uncoated nonwovens, the hPP shows similar values to bico NW and significantly better than mono PE.

### PEEL STRENGTH

The table below reports the peel strength results. As can be seen, when an elastomer such as a PBPE is used in sufficient amount, it is not possible to delaminate the samples irrespective of the non-woven used. Hence the peel force values cannot be determined because the delamination cannot be initiated. If no elastomer is used, then only samples having bico PP: PE or mono PE non-wovens show perfect adhesion and no delamination can be initiated. Contrarily, a mono PP non-woven can be delaminated from the non-breathable coating layer if an elastomer is not used

| | 85% Resin A +15% Resin B | 100% Resin E | 85% Resin E +15% Resin B |
|---|---|---|---|
| Homo PP NW | No delamination possible | 0.46 N | No delamination possible |
| Bico PP:PE 50:50 NW | No delamination possible | No delamination possible | No delamination possible |
| PE NW | No delamination possible | No delamination possible | No delamination possible |

## Claims

1. A non-breathable extrusion coated nonwoven structure comprising
a.a web comprised of monocomponent or bicomponent fibers wherein the monocomponent or bicomponent fibers comprise an ethylene based polymer;
b. a non-breathable extrusion coated film layer wherein the film layer is comprised of an ethylene based polymer.

2. The structure of claim 1 wherein the film has a basis weight of less than 20 gsm

3. The structure of claim 1 wherein the nonwoven has a basis weight of less than 20 gsm.

4. The structure of claim 1 wherein the structure has an abrasion resistance of lower than 0.5 mg/cm³.

5. The structure of claim 1 wherein the structure has an elongation at break in CD of greater than 50%

6. The structure of claim 1 wherein the structure has softness lower than 45 as measured by handle-o-meter

7. The structure of claim 1 wherein the structure has a peel strength exceeding the test method capabilities.

8. The structure of claim 1 wherein the resin used in the film comprises
a. from 20 to 80 percent by weight of LDPE
b. from 0 to 80 percent by weight of LLDPE.

9. The structure of claim 8 wherein the LLDPE has a Comonomer Distribution Constant in the range of from greater than 45 to 400 and a zero shear viscosity range of from 2 to 20.

10. The structure of claim 1 wherein the film further comprises an adhesion promoter.

11. The structure of claim 10 wherein the adhesion promoter is blended with the ethylene based polymer.

12. The structure of claim 10 wherein the adhesion promoter is a tie layer located between the film and the nonwoven web.

13. The structure of claim 11 wherein the adhesion promoter is selected from the group consisting of PBPEs, olefin block copolymers and linear polyethylene having a density less than 0.905 g/cm³.

14. The structure of claim 1 wherein the structure has a basis weight of from 9 to 40 gsm.

15. The structure of claim 1 wherein the structure has a basis weight of from 12 to 25 gsm.

16. The structure of claim 1 wherein the web is a spunbond web, a carded web, airlaid web, spunlaced web, meltblown web, or combinations thereof in a multilayer structure .

17. The structure of claim 1 wherein the structure is used in a medical application and has a basis weight in the range of 10 -50 gsm

18. The structure of claim 1 wherein the structure is used in hygiene application and has a basis weight in the range of 6 -30gsm

19. The structure of claim 1 wherein the structure is used in industrial application and has a basis weight in the range of 10 - 50 gsm.

20. The structure of claim 1 wherein the film contains less than 25% filler by weight of the film.
